# EUROPEAN PATENT APPLICATION

(11) **EP 4 163 802 A1**
(43) Date of publication of application: **12.04.2023**
(21) Application number: 21834027.1
(22) Date of filing: 28.06.2021
(51) Int. Cl.: G06F 16/36

(54) **KNOWLEDGE GRAPH CONSTRUCTION METHOD, APPARATUS AND SYSTEM AND COMPUTER STORAGE MEDIUM**

(30) Priority: 30.06.2020 CN 202010613853
(71) Applicant: Huawei Technologies Co., Ltd., Longgang District, Shenzhen, Guangdong 518129 (CN)
(72) Inventor: TIAN, Shang, Shenzhen, Guangdong 518129 (CN); WANG, Zhongyu, Shenzhen, Guangdong 518129 (CN); XIE, Yuming, Shenzhen, Guangdong 518129 (CN)
(74) Representative: Thun, Clemens
(86) International application number: PCT/CN2021/102651
(87) International publication number: WO 2022/001924

(57) **Abstract**

This application discloses a method, an apparatus, and a system for constructing a knowledge graph, and a computer storage medium, and belongs to the field of network technologies. A first device obtains first configuration information of a target network device. The first device obtains a template matching file corresponding to the target network device, where the template matching file is used to describe one or more formats of one or more command lines in configuration information of a type of network device to which the target network device belongs. Then, the first device creates, based on the template matching file and a first command line in the first configuration information, a target network entity corresponding to the first command line. A type of the target network entity is a device, an interface, a protocol, or a service. The target network entity is configured to construct a knowledge graph of a network in which the target network device is located. In this application, a knowledge graph of a network in which a network device is located is constructed based on configuration information of the network device.

## Description

This application claims priority to Chinese Patent Application No. 202010613853.8, filed on June 30, 2020 and entitled "METHOD, APPARATUS, AND SYSTEM FOR CONSTRUCTING KNOWLEDGE GRAPH, AND COMPUTER STORAGE MEDIUM", which is incorporated herein by reference in its entirety.

### TECHNICAL FIELD

This application relates to the field of network technologies, and in particular, to a method, an apparatus, and a system for constructing a knowledge graph, and a computer storage medium.

### BACKGROUND

A current network usually includes a plurality of devices. Causes of network faults are complex, and efficiency of manually summarizing fault determining rules is low. By constructing a knowledge graph on a network, configuration association between devices is reflected on the knowledge graph, and fault alarms are mounted on the knowledge graph, to perform root cause tracing and analysis. This improves fault locating efficiency and accuracy.

Currently, when a knowledge graph of an unstructured text is constructed, an entity in the unstructured text is usually extracted based on a domain specific vocabulary, and a word other than a domain word and a non-domain common word in the unstructured text is identified as an entity. For example, a domain specific vocabulary corresponding to a network includes "IP", an entity extracted from "IP=1.1.1.1" is "1.1.1.1", and "=" is a non-common field word.

However, when entities in first configuration information of a network device are extracted based on a domain specific vocabulary, many entities with duplicate names appear, and whether these entities with duplicate names represent a same meaning cannot be determined, so that an association relationship between the entities cannot be determined. Therefore, currently, a knowledge graph cannot be constructed based on first configuration information of a network device.

### SUMMARY

This application provides a method, an apparatus, and a system for constructing a knowledge graph, and a computer storage medium.

According to a first aspect, a method for constructing a knowledge graph is provided. The method includes: A first device obtains first configuration information of a target network device. The first device obtains a template matching file corresponding to the target network device, where the template matching file is used to describe one or more formats of one or more command lines in configuration information of a type of network device to which the target network device belongs. The first device creates, based on the template matching file and a first command line in the first configuration information, a target network entity corresponding to the first command line. A type of the target network entity is a device, an interface, a protocol, or a service. The target network entity is configured to construct a knowledge graph of a network in which the target network device is located.

In this application, because the template matching file can describe the format of the command line in the configuration information, a network entity corresponding to the command line in the configuration information can be accurately created based on the template matching file. In addition, because the network entity corresponding to the command line is associated with a command line template, a specific meaning of the created network entity may be determined based on the command line template, to construct, based on configuration information of a network device, a knowledge graph of a network in which the network device is located.

Optionally, the template matching file includes a plurality of command line templates, and each command line template is used to describe a format of a command line in the configuration information of the type of network device. An implementation process in which the first device creates, based on the template matching file and the first command line in the first configuration information, the target network entity corresponding to the first command line includes:
The first device determines, in the template matching file, a target command line template that matches the first command line. Then, the first device creates the target network entity based on the target command line template and the first command line.

Optionally, the command line template is obtained based on a command line expression. The command line template includes all content in the command line expression, and the command line template can indicate a sequence of content included in a corresponding command line in the command line. The command line expression includes a description of the corresponding command line in the configuration information of the type of network device.

Optionally, that the first command line matches the target command line template includes: The first command line includes all mandatory content in the target command line template, and a sequence of the content included in the first command line is consistent with a sequence indicated by the target command line template.

Optionally, a command line expression corresponding to the first command line includes one or more parameters. An implementation process in which the first device creates the target network entity based on the target command line template and the first command line includes:
The first device generates one or more parameter key-value pairs based on the target command line template and the first command line, where the parameter key-value pair includes a parameter name of a parameter in the target command line template and a corresponding parameter value in the first command line. Then, the first device creates the target network entity based on the one or more parameter key-value pairs.

Optionally, an arrangement sequence of the one or more parameter key-value pairs is consistent with a sequence indicated by the target command line template, and a name of the target network entity includes information about the first parameter key-value pair in the one or more parameter key-value pairs.

In a possible implementation, the command line template is obtained based on the command line expression, and the command line template includes a regular expression of the command line expression. An implementation process in which the first device determines, in the template matching file, the target command line template that matches the first command line includes:
The first device uses a first command line template in the template matching file as a to-be-matched command line template, where the first command line template is any command line template in the template matching file. The first device executes a template matching procedure on the to-be-matched command line template. The template matching procedure includes:
performing regular expression matching with the first command line by using a regular expression in the to-be-matched command line template; and when the regular expression successfully matches the first command line, using the to-be-matched command line template as the target command line template; or when the regular expression fails to match the first command line, using a second command line template in the template matching file as a new to-be-matched command line template, and executing the template matching procedure again, where the second command line template is any command line template on which no template matching procedure has been performed in the template matching file.

In another possible implementation, the command line template is obtained based on the command line expression, and the command line template includes a regular expression of the command line expression. An implementation process in which the first device determines, in the template matching file, the target command line template that matches the first command line includes:

The first device uses a third command line template in a target command line template set as a to-be-matched command line template, where the target command line template set includes a command line template that is in the template matching file and that successfully matches a command line in historical configuration information of the type of network device, and the third command line template is any command line template in the target command line template set. The first device executes a template matching procedure on the to-be-matched command line template. The template matching procedure includes:
performing regular expression matching with the first command line by using a regular expression in the to-be-matched command line template; and when the regular expression successfully matches the first command line, using the to-be-matched command line template as the target command line template; or when the regular expression fails to match the first command line, if the target command line template set includes a fourth command line template, using the fourth command line template as a new to-be-matched command line template, and executing the template matching procedure again; or if the target command line template set does not include the fourth command line template, using a fifth command line template as a new to-be-matched command line template, and executing the template matching procedure again, where the fourth command line template is any command line template on which no template matching procedure has been performed in the target command line template set, and the fifth command line template is any command line template on which no template matching procedure has been performed in the template matching file.

Optionally, the first device may further obtain, from the template matching file, a plurality of command line templates that successfully match command lines in the historical configuration information of the type of network device, and use, as a command line template in the target command line template set, a command line template that is in the plurality of command line templates and whose accumulated quantity of times of successfully matching the command line in the historical configuration information of the type of network device reaches a target threshold of matching.

In this application, because the accumulated quantity of times that the command line template in the target command line template set successfully matches the command line in the historical configuration information of the target network device reaches the target threshold of matching, a possibility that the first command line matches the command line template in the target command line template set is usually greater than a possibility that the first command line matches another command line template in the template matching file other than the target command line template set. In a process in which the first device determines, in the template matching file, the target command line template that matches the first command line, the first device first executes the template matching procedure on the command line template in the target command line template set, so that template matching efficiency can be improved.

Optionally, the command line template further includes a target content list, and the target content list includes one or more pieces of mandatory fixed content in a corresponding command line. An implementation process in which the first device performs regular expression matching with the first command line by using the regular expression in the to-be-matched command line template includes: When the first command line includes all content in a target content list in the to-be-matched command line template, the first device performs regular expression matching with the first command line by using the regular expression in the to-be-matched command line template.

Optionally, when the first command line does not include any content in the target content list in the to-be-matched command line template, the first device determines that the to-be-matched command line template fails to match the first command line.

In this application, before performing regular expression matching with the first command line by using the regular expression, the first device first performs fuzzy matching with the first command line by using the mandatory fixed content in the target content list, so that to-be-matched command line templates can be preliminarily filtered, a quantity of command line templates used for regular expression matching is reduced, template matching efficiency can be improved, and computing resources can be saved.

Optionally, the command line template is obtained based on the command line expression. After determining, in the template matching file, the target command line template that matches the first command line, the first device may obtain a target command line expression corresponding to the target command line template, and then determine, based on the target command line expression, whether a network entity needs to be created for the first command line. Correspondingly, after determining that a network entity needs to be created for the first command line, the first device creates the target network entity based on the target command line template and the first command line.

In a possible implementation, an implementation process in which the first device determines, based on the target command line expression, whether a network entity needs to be created for the first command line includes: When a collection of entity-like ontologies includes the target command line expression, the first device determines that a network entity needs to be created for the first command line.

In this application, the collection of entity-like ontologies includes a plurality of command line expressions of corresponding command lines that correspond to network entities. The first device first determines, by determining whether the collection of entity-like ontologies has the target command line expression corresponding to the target command line template, whether a network entity needs to be created for the first command line. When determining that no network entity needs to be created for the first command line, the first device stops executing a procedure of creating the target network entity corresponding to the first command line. When determining that a network entity needs to be created for the first command line, the first device creates, based on the target command line template and the first command line, the target network entity corresponding to the first command line. Efficiency and accuracy of creating a network entity corresponding to a command line can be improved.

Optionally, the first device may further obtain, in the historical configuration information of the type of network device, all historical command lines that correspond to network entities, and generate the collection of entity-like ontologies based on command line expressions corresponding to all the historical command lines.

In another possible implementation, an implementation process in which the first device determines, based on the target command line expression, whether a network entity needs to be created for the first command line includes: The first device inputs the target command line expression to an entity discrimination model to obtain a result output by the entity discrimination model based on the target command line expression, where the result includes a first indication that a network entity needs to be created for the first command line or a second indication that no network entity needs to be created for the first command line, and the entity discrimination model is obtained based on a plurality of sample command line expressions whose corresponding command lines are known to correspond to network entities or not. When the result includes the first indication, the first device determines that a network entity needs to be created for the first command line. When the result includes the second indication, the first device determines that no network entity needs to be created for the first command line.

In this application, the first device first determines, by using the entity discrimination model, whether a network entity needs to be created for the first command line. When determining that no network entity needs to be created for the first command line, the first device stops executing a procedure of creating the target network entity corresponding to the first command line. When determining that a network entity needs to be created for the first command line, the first device creates, based on the target command line template and the first command line, the target network entity corresponding to the first command line. Efficiency and accuracy of creating a network entity corresponding to a command line can be improved.

Optionally, the first device may further obtain the plurality of sample command line expressions whose corresponding command lines are known to correspond to network entities or not, and train, by using the plurality of sample command line expressions, to obtain the entity discrimination model.

Optionally, after creating, based on the template matching file and the first command line in the first configuration information, the target network entity corresponding to the first command line, the first device may further determine, based on one or more attributes of the target network entity, an associated network entity that has an association relationship with the target network entity; generate a knowledge graph triplet based on the target network entity, the associated network entity, and the association relationship, and then construct, based on the knowledge graph triplet, the knowledge graph of the network in which the target network device is located.

In a possible implementation, an implementation process in which the first device determines, based on the one or more attributes of the target network entity, the associated network entity that has the association relationship with the target network entity includes:
A first device obtains a to-be-determined network entity from a network entity set, where the to-be-determined network entity meets: the to-be-determined network entity has a first attribute, the first attribute is any attribute of the target network entity, and an attribute meaning and an attribute value of the first attribute of the to-be-determined network entity are respectively the same as an attribute meaning and an attribute value of a first attribute of the target network entity; and the network entity set includes a network entity created based on one or more other command lines in the first configuration information. The first device determines, according to an association relationship validity discrimination rule, whether an association relationship that is between the to-be-determined network entity and the target network entity and that is based on the first attribute is valid. When the association relationship that is between the to-be-determined network entity and the target network entity and that is based on the first attribute is valid, the to-be-determined network entity is determined as the associated network entity.

Optionally, an implementation process in which the first device obtains the to-be-determined network entity from the network entity set includes:
The first device obtains one or more initial network entities from the network entity set, where the initial network entity has a to-be-determined attribute, and an attribute value of the to-be-determined attribute is the same as the attribute value of the first attribute of the target network entity. When a text similarity between an attribute name of the to-be-determined attribute of the initial network entity and an attribute name of the first attribute of the target network entity is greater than a first threshold, and/or a text similarity between text content of the to-be-determined attribute in a command line expression corresponding to the initial network entity and text content of the first attribute in a command line expression corresponding to the target network entity is greater than a second threshold, the first device determines that an attribute meaning of the to-be-determined attribute is the same as the attribute meaning of the first attribute of the target network entity. Then, the first device determines the initial network entity as the to-be-determined network entity.

Optionally, the first device may further obtain a sample network entity pair set, where the sample network entity pair set includes a plurality of sample network entity pairs that are known to have an association relationship or not and attributes of sample network entities in each sample network entity pair; and then the first device determines the association relationship validity discrimination rule based on the sample network entity pair set.

In another possible implementation, an implementation process in which the first device determines, based on the one or more attributes of the target network entity, the associated network entity that has the association relationship with the target network entity includes:
The first device obtains, from a valid relationship type set, a target valid relationship type group including the type of the target network entity, where the valid relationship type set includes a plurality of valid relationship type groups, each valid relationship type group includes two entity types and one attribute pair, the two entity types are types of two network entities having an association relationship, the attribute pair includes two attributes enabling the two network entities to have an association relationship, and the two attributes have a same attribute meaning. The first device obtains a to-be-determined network entity based on the target valid relationship type group, where two entity types in the target valid relationship type group are the type of the target network entity and a type of the to-be-determined network entity. When an attribute value of a second attribute of the to-be-determined network entity is the same as an attribute value of a third attribute of the target network entity, the first device determines the to-be-determined network entity as the associated network entity. The second attribute is an attribute corresponding to the type of the to-be-determined network entity in an attribute pair of the target valid relationship type group, and the third attribute is an attribute corresponding to the type of the target network entity in the attribute pair of the target valid relationship type group.

In this application, because the valid relationship type group includes two entity types and one attribute pair that enables network entities of the two entity types to have an association relationship, an associated network entity of a network entity may be searched in a directional manner based on the valid relationship type group, so that efficiency of determining the associated network entity of the network entity is high and a few computing resources are consumed.

Optionally, the first device may further obtain a historical valid relationship set, where the historical valid relationship set includes a plurality of historical valid relationship groups, each historical valid relationship group includes two historical network entities having an association relationship and one or more historical attribute pairs enabling the two historical network entities to have an association relationship, and each historical attribute pair separately includes one attribute of the two historical network entities. Then, the first device generates the valid relationship type group in the valid relationship type set based on types of the two historical network entities having an association relationship and the historical attribute pair enabling the two historical network entities to have an association relationship that are in the historical valid relationship group.

Optionally, an implementation process in which the first device obtains the template matching file corresponding to the target network device includes: The first device generates the template matching file.

Optionally, an implementation process in which the first device generates the template matching file includes:
The first device obtains a product manual of the type of network device, where the product manual includes a plurality of command line expressions, and each command line expression includes a description of a command line in the configuration information of the type of network device. The first device generates, for each command line expression in the product manual, a command line template based on the command line expression, to obtain the template matching file, where the command line template includes one or more of the command line expression, a regular expression of the command line expression, and the target content list, and the target content list includes the one or more pieces of mandatory fixed content in the corresponding command line.

Optionally, the first device may further receive one or more of the template matching file, the association relationship validity discrimination rule, the valid relationship type set, the target command line template set, the collection of entity-like ontologies, or the entity discrimination model that is sent by a second device.

Optionally, the type of network device has a same model.

Optionally, the type of network device has a same product version.

Optionally, when the first device is a management device, an implementation process in which the first device obtains the first configuration information of the target network device includes: The first device receives the first configuration information sent by the target network device.

According to a second aspect, a method for constructing a knowledge graph is provided. The method includes: A second device generates a template matching file corresponding to a type of network device, where the template matching file is used to describe one or more formats of one or more command lines in configuration information of the type of network device; and the second device sends the template matching file to a first device, to enable the first device to create a network entity corresponding to a command line in configuration information of any network device with the type of network device. A type of the network entity is a device, an interface, a protocol, or a service.

Optionally, an implementation process in which the second device generates the template matching file corresponding to the type of network device includes:
The second device obtains a product manual of the type of network device, where the product manual includes a plurality of command line expressions, and each command line expression includes a description of a command line in the configuration information of the type of network device. The second device generates, for each command line expression in the product manual, a command line template based on the command line expression, to obtain the template matching file. The command line template includes one or more of the command line expression, a regular expression of the command line expression, and a target content list. The target content list includes one or more pieces of mandatory fixed content in a corresponding command line.

Optionally, the second device may further obtain a sample network entity pair set, where the sample network entity pair set includes a plurality of sample network entity pairs that are known to have an association relationship or not and attributes of sample network entities in each sample network entity pair. The second device determines an association relationship validity discrimination rule based on the sample network entity pair set, and then sends the association relationship validity discrimination rule to the first device.

Optionally, the second device may further obtain a historical valid relationship set, where the historical valid relationship set includes a plurality of historical valid relationship groups, each historical valid relationship group includes two historical network entities having an association relationship and one or more historical attribute pairs enabling the two historical network entities to have an association relationship, and each historical attribute pair separately includes one attribute of the two historical network entities. The second device generates a valid relationship type group based on types of the two historical network entities having an association relationship and the historical attribute pair enabling the two historical network entities to have an association relationship that are in the historical valid relationship group. Then, the second device sends a valid relationship type set to the first device, where the valid relationship type set includes a plurality of valid relationship type groups.

Optionally, the template matching file includes a plurality of command line templates, and each command line template is used to describe a format of a command line in the configuration information of the type of network device. The second device may further obtain, from the template matching file, a plurality of command line templates that successfully match command lines in historical configuration information of the type of network device, and use, as a command line template in a target command line template set, a command line template that is in the plurality of command line templates and whose accumulated quantity of times of successfully matching the command line in the historical configuration information of the type of network device reaches a target threshold of matching. Then, the second device sends the target command line template set to the first device.

Optionally, the second device may further obtain, in the historical configuration information of the type of network device, all historical command lines that correspond to network entities; generate a collection of entity-like ontologies based on command line expressions corresponding to all the historical command lines; and send the collection of entity-like ontologies to the first device.

Optionally, the second device may further obtain a plurality of sample command line expressions whose corresponding command lines are known to correspond to network entities or not, and train, by using the plurality of sample command line expressions, to obtain an entity discrimination model. Then, the second device sends the entity discrimination model to the first device.

According to a third aspect, an apparatus for constructing a knowledge graph is provided. The apparatus includes a plurality of functional modules. The plurality of functional modules interact with each other to implement the method according to the first aspect and the implementations of the first aspect. The plurality of functional modules may be implemented based on software, hardware, or a combination of software and hardware, and the plurality of functional modules may be randomly combined or divided based on specific implementation.

According to a fourth aspect, another apparatus for constructing a knowledge graph is provided. The apparatus includes a plurality of function modules, and the plurality of function modules interact with each other to implement the method in the second aspect and the implementations of the second aspect. The plurality of functional modules may be implemented based on software, hardware, or a combination of software and hardware, and the plurality of functional modules may be randomly combined or divided based on specific implementation.

According to a fifth aspect, a computer device is provided, including a processor and a memory, where
the memory is configured to store a computer program, and the computer program includes program instructions; and
the processor is configured to invoke the computer program to implement the method for constructing a knowledge graph according to any one of the implementations of the first aspect.

According to a sixth aspect, another computer device is provided, including a processor and a memory, where
the memory is configured to store a computer program, and the computer program includes program instructions; and
the processor is configured to invoke the computer program to implement the method for constructing a knowledge graph according to any one of the implementations of the second aspect.

According to a seventh aspect, a system for constructing a knowledge graph is provided, including a first device and a second device, where the first device includes the apparatus according to the third aspect or the computer device according to the fifth aspect, and the second device includes the apparatus according to the fourth aspect or the computer device according to the sixth aspect.

According to an eighth aspect, a computer storage medium is provided, where the computer storage medium stores instructions, and when the instructions are executed by a processor, the method for constructing a knowledge graph in the first aspect or the second aspect is implemented.

According to a ninth aspect, a chip is provided. The chip includes a programmable logic circuit and/or program instructions. When the chip runs, the method in the first aspect and the implementations of the first aspect or the method in the second aspect and the implementations of the second aspect is implemented.

Beneficial effects brought by the technical solutions provided in this application include at least the following.

A first device creates, based on a template matching file corresponding to a network device, a network entity corresponding to a command line in configuration information of the network device. Because the template matching file can describe a format of the command line in the configuration information, the network entity corresponding to the command line in the configuration information can be accurately created based on the template matching file. In addition, because the network entity corresponding to the command line is associated with a command line template, a specific meaning of the created network entity may be determined based on the command line template, and then an association relationship between network entities may be determined, to construct, based on the configuration information of the network device, a knowledge graph of a network in which the network device is located.

### BRIEF DESCRIPTION OF DRAWINGS

FIG. 1 is a schematic diagram of a structure of a system for constructing a knowledge graph according to an embodiment of this application;
FIG. 2 is a schematic flowchart of a method for constructing a knowledge graph according to an embodiment of this application;
FIG. 3 is a schematic diagram of a structure of an apparatus for constructing a knowledge graph according to an embodiment of this application;
FIG. 4 is a schematic diagram of a structure of another apparatus for constructing a knowledge graph according to an embodiment of this application;
FIG. 5 is a schematic diagram of a structure of still another apparatus for constructing a knowledge graph according to an embodiment of this application; and
FIG. 6 is a block diagram of a computer device according to an embodiment of this application.

### DESCRIPTION OF EMBODIMENTS

To make the objectives, technical solutions, and advantages of this application clearer, the following further describes the implementations of this application in detail with reference to the accompanying drawings.

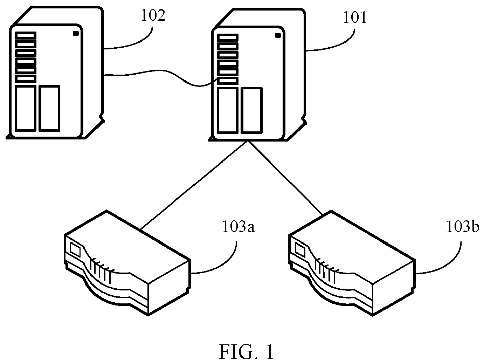

FIG. 1 is a schematic diagram of a structure of a system for constructing a knowledge graph according to an embodiment of this application. As shown in FIG. 1, the system includes a first device 101 and a second device 102. The first device 101 is connected to the second device 102 over a wired network or a wireless network. In embodiments of this application, the first device 101 is a network device, and the second device 102 is a management device; the first device 101 is a network device, and the second device 102 is a cloud device; or the first device 101 is a management device, and the second device 102 is a cloud device.

The cloud device may be one server, a server cluster including several servers, or a cloud computing service center. For example, the cloud device may be a network artificial intelligence engine (network artificial intelligence engine, NAIE). The management device may be one server, a server cluster including several servers, or a cloud computing service center. The cloud device usually refers to an upper-level device of the management device, configured to provide a data processing model and the like for the management device. Optionally, the cloud device and the management device may alternatively be integrated into one device. This is not limited in embodiments of this application. The management device may also be used as an analysis device and/or a control device, configured to manage and control a network device in a communication network. The management device may be one or more devices.

In this embodiment of this application, an example in which the first device 101 is a management device and the second device 102 is a cloud device is used for description. Optionally, refer to FIG. 1. A management device 101 is connected to network devices 103a and 103b (collectively referred to as network devices 103) in a communication network over a wired network or a wireless network. A quantity of network devices in FIG. 1 is merely used as an example, and is not intended to limit the communication network provided in embodiments of this application. The communication network may be a data center network (data center network, DCN), a metropolitan area network, a wide area network, a campus network, a virtual local area network (virtual local area network, VLAN), a virtual extensible local area network (virtual extensible local area network, VXLAN), or the like. A type of the communication network is not limited in embodiments of this application. The network device 103 may be a switch, a router, or the like.

The management device 101 is configured to: collect device information of the network device 103 in the communication network, and provide the device information of the network device 103 for a cloud device 102. Device information of a network device includes first configuration information, a routing entry, and/or the like of the network device. The first configuration information of the network device usually includes first configuration information of an interface, first configuration information of a protocol, first configuration information of a service, and the like. The management device 101 may further collect an abnormal event generated in the communication network, and the like. The management device 101 may further store a networking topology of the communication network managed by the management device 101.

Optionally, the management device 101 periodically collects the device information of the network device 103. Alternatively, when the device information of the network device 103 changes, the network device 103 actively reports changed device information to the management device 101. Certainly, in some application scenarios, a management device may alternatively be indirectly connected to a network device in a communication network by using a collection device. In other words, the application scenario may further include the collection device. This is not limited in this embodiment of this application.

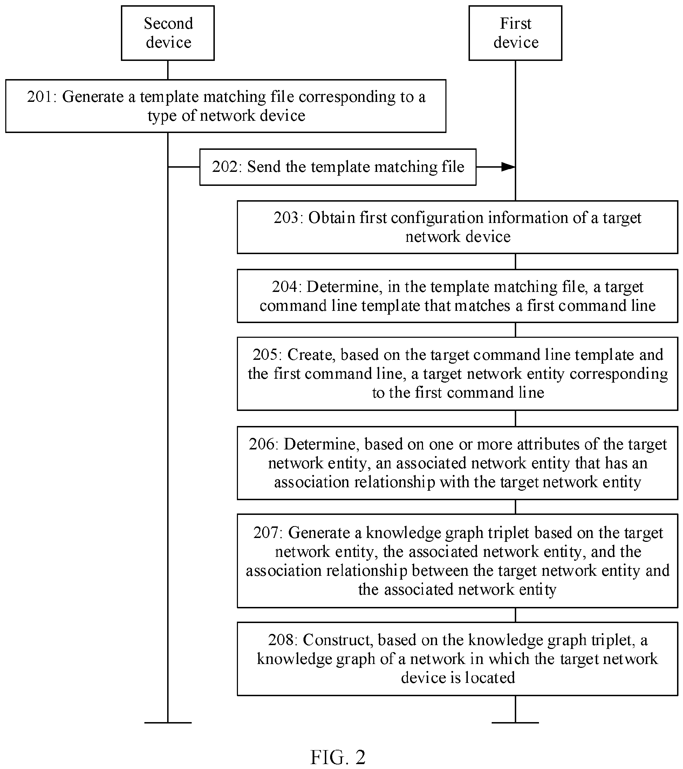

FIG. 2 is a schematic flowchart of a method for constructing a knowledge graph according to an embodiment of this application. The method may be applied to the system for constructing a knowledge graph shown in FIG. 1. As shown in FIG. 2, the method includes the following steps.

Step 201: A second device generates a template matching file corresponding to a type of network device.

The template matching file is used to describe one or more formats of one or more command lines in configuration information of the type of network device. The template matching file may be a file in a JSON format.

Optionally, the template matching file includes a plurality of command line templates, and each command line template is used to describe a format of a command line in the configuration information of the type of network device. The command line template is obtained based on a command line expression. The command line template includes all content in the command line expression, and the command line template can indicate a sequence of content included in a corresponding command line in the command line. The command line expression includes a description of the corresponding command line in the configuration information of the type of network device.

Optionally, an implementation process in which the second device generates the template matching file corresponding to the type of network device includes the following step 2011 and step 2012.

In step 2011, the second device obtains a product manual of the type of network device.

The product manual includes a plurality of command line expressions. Each command line expression includes a description of one command line in the configuration information of the type of network device.

The command line expression includes all mandatory content and all optional content in a corresponding command line. The mandatory content refers to content that is bound to appear in the command line corresponding to the command line expression, and the optional content refers to content that may appear in the command line corresponding to the command line expression. Content in the command line may also be classified into fixed content and variable content. The variable content in the command line is usually referred to as a parameter.

For example, it is assumed that content of a command line expression is "vni <vni-id> mcast-group <ip-address>". The command line expression indicates that "vni", "vni-id", "mcast-group", and "ip-address" are mandatory content in a corresponding command line, where "vni" and "mcast-group" are fixed content, and "vni-id" and "ip-address" are parameters.

For another example, it is assumed that content of a command line expression is "vni <vni-id> [mcast-group <ip-address>]". The command line expression indicates that "vni" and "vni-id" are mandatory content in a corresponding command line, and "mcast-group" and "ip-address" are optional content in the corresponding command line, where "vni" is mandatory content, "vni-id" is a mandatory parameter, "mcast-group" is optional content, and "ip-address" is an optional parameter.

In step 2012, the second device generates, for each command line expression in the product manual, a command line template based on the command line expression, to obtain the template matching file.

The command line template includes one or more of the command line expression, a regular expression of the command line expression, and a target content list. The target content list includes one or more pieces of mandatory fixed content in the corresponding command line. Optionally, the target content list may include all mandatory fixed content in the corresponding command line.

For example, refer to the first example in step 2011. A target content list may include "vni" and/or "mcast-group". Refer to the second example in step 2011. A target content list may include "vni".

Optionally, the command line template includes the command line expression, the regular expression of the command line expression, and the target content list. The target content list includes two parts. One part includes the first piece of mandatory fixed content in the command line expression, and the other part includes all mandatory fixed content in the command line expression. Refer to the first example in step 2011. A command line template generated based on the command line expression "vni <vni-id> mcast-group <ip-address>" may be shown in Table 1.

**Table 1**

| Content meaning | Content of a command line template |
|---|---|
| Command line expression | vni <vni-id> mcast-group <ip-address> |
| Regular expression of the command line expression | ^vni (?P<vni_id>[^]^{∗}) mcast-group |
| | (?P<ip_address>[^]^{∗})$ |
| Target content list | vni |
| | vni; mcast-group |

Refer to Table 1. Both the command line expression and the regular expression of the command line expression include all content in a corresponding command line, and can indicate a sequence of content included in the corresponding command line in the command line. In other words, the sequence is a sequence of the content included in the corresponding command line in the command line expression or the regular expression of the command line expression.

Optionally, the template matching file corresponding to the type of network device may alternatively be obtained based on expert experience.

Optionally, the type of network device has a same model. Optionally, the type of network device further has a same product version.

In a possible implementation, network devices of a same model correspond to one template matching file, and network devices of different models correspond to different template matching files. In other words, a plurality of network devices of a same model are used as one type of network device. Correspondingly, in step 201, the second device may generate, based on a product manual of a network device of a model, a template matching file corresponding to the model.

In another possible implementation, network devices of a same model and a same product version correspond to one template matching file, and network devices of a same model but different product versions correspond to different template matching files. In other words, a plurality of network devices of a same model and a same product version are used as one type of network device. Correspondingly, in step 201, the second device may generate, based on a product manual of a network device of a version and a model, a template matching file corresponding to the version and the model.

Step 202: The second device sends the template matching file to a first device.

The template matching file is used by the first device to create a network entity corresponding to a command line in configuration information of any network device with the type of network device. A type of the network entity is a device, an interface, a protocol, or a service.

Optionally, the device type specifically includes a board, a primary card, or the like. The protocol type includes the open shortest path first (open shortest path first, OSPF), the border gateway protocol (Border Gateway Protocol, BGP), or the like. The service type specifically includes a virtual private network (virtual private network, VPN) service, a dynamic host configuration protocol (Dynamic Host Configuration Protocol, DHCP) service, a VLAN service, a bridge-domain (bridge-domain, BD) service, or the like.

Optionally, the template matching file may alternatively be generated by the first device. In this case, step 201 and step 202 may be replaced with: The first device generates a template matching file corresponding to a type of network device. For an implementation in which the first device generates the template matching file, refer to the implementation in which the second device generates the template matching file. Details are not described herein in this embodiment of this application.

Step 203: The first device obtains first configuration information of a target network device.

The target network device is any network device with the type of network device. The first configuration information may be current configuration information of the target network device. Optionally, when the first device is a management device, an implementation process in which the first device obtains the first configuration information of the target network device includes: The first device receives the first configuration information sent by the target network device.

In this embodiment of this application, after obtaining the first configuration information of the target network device, the first device creates, based on the template matching file and a first command line in the first configuration information, a target network entity corresponding to the first command line. The first command line may be any command line in the first configuration information. Optionally, for an implementation process in which the first device creates, based on the template matching file and the first command line, the target network entity corresponding to the first command line, refer to the following step 204 and step 205.

Step 204: The first device determines, in the template matching file, a target command line template that matches the first command line.

A type of the target network entity is a network device, an interface, a protocol, or a service. The target network entity is configured to construct a knowledge graph of a network in which the target network device is located.

Optionally, that the first command line matches the target command line template includes: The first command line includes all mandatory content in the target command line template, and a sequence of the content included in the first command line is consistent with a sequence indicated by the target command line template.

For example, a first command line is represented as "vni 5009 mcast-group 225.0.0.1", and the first command line matches the command line template shown in Table 1. "5009" in the first command line is a parameter value corresponding to the parameter "vni-id" in the command line template, and "225.0.0.1" in the first command line is a parameter value corresponding to the parameter "ip-address" in the command line template.

Optionally, the command line template includes the regular expression of the command line expression. This embodiment of this application provides the following two optional embodiments for implementing step 204.

In the first optional embodiment of this application, an implementation process of step 204 includes the following step 2041a and step 2042a.

In step 2041a, the first device uses a first command line template in the template matching file as a to-be-matched command line template, where the first command line template is any command line template in the template matching file.

In step 2042a, the first device executes a template matching procedure on the to-be-matched command line template.

The template matching procedure includes the following step a11 to step a13.

In step a11, the first device performs regular expression matching with the first command line by using a regular expression in the to-be-matched command line template.

In step a12, when the regular expression successfully matches the first command line, the first device uses the to-be-matched command line template as the target command line template.

After obtaining the target command line template, the first device stops executing the template matching procedure.

In step a13, when the regular expression fails to match the first command line, the first device uses a second command line template in the template matching file as a new to-be-matched command line template, and executes the template matching procedure again, where the second command line template is any command line template on which no template matching procedure has been executed in the template matching file.

In the second optional embodiment of this application, an implementation process of step 204 includes the following step 2041b and step 2042b.

In step 2041b, the first device uses a third command line template in a target command line template set as a to-be-matched command line template, where the third command line template is any command line template in the target command line template set.

The target command line template set includes a command line template that is in the template matching file and that successfully matches a command line in historical configuration information of the type of network device to which the target network device belongs. The target command line template set may be generated by the first device, or the target command line template set may be generated by the second device and then sent to the first device.

Optionally, an implementation process in which the first device or the second device generates the target command line template set includes: obtaining, from the template matching file, a plurality of command line templates that successfully match command lines in the historical configuration information of the type of network device to which the target network device belongs; and using, as a command line template in the target command line template set, a command line template that is in the plurality of command line templates and whose accumulated quantity of times of successfully matching the command line in the historical configuration information of the type of network device reaches a target threshold of matching.

For example, if a value of the target threshold of matching is 1, the target command line template set includes each command line template that successfully matches the command line in the historical configuration information of the type of network device.

Optionally, the target command line template set further includes an attribute name and/or an entity type corresponding to each command line template in the target command line template set. The command line template in the target command line template set may further include a command line expression. For example, the target command line template set provided in this embodiment of this application may be shown in Table 2.

**Table 2**

| Entity type | Attribute name | Command line template | |
|---|---|---|---|
| | | Command line expression | Regular expression of the command line expression |
| bridge-domain (service) | bd_id | bridge-domain <bd-id> | ^bridge-domain (?P<bd_id>[^]^{∗}) $ |
| bridge-domain (service) | vni_id | vxlan vni <vni-id> | ^vxlan vni (?P<vni_id> [^]^{∗}) $ |
| bgp (protocol) | ipv4_address | router-id < ipv4-address > | ^router-id (?P< ipv4_address >[^]^{∗}) $ |
| interface (interface) | bd_id | bridge-domain <bd-id> | ^bridge-domain (?P<bd_id>[^]^{∗}) $ |
| ... | ... | ... | ... |

In step 2042b, the first device executes a template matching procedure on the to-be-matched command line template.

The template matching procedure includes the following step b11 to step b14.

In step b11, the first device performs regular expression matching with the first command line by using a regular expression in the to-be-matched command line template.

In step b12, when the regular expression successfully matches the first command line, the first device uses the to-be-matched command line template as the target command line template.

In step b13, when the regular expression fails to match the first command line, if the target command line template set includes a fourth command line template, the first device uses the fourth command line template as a new to-be-matched command line template, and executes the template matching procedure again, where the fourth command line template is any command line template on which no template matching procedure has been performed in the target command line template set.

In step b14, when the regular expression fails to match the first command line, if the target command line template set does not include the fourth command line template, the first device uses a fifth command line template as a new to-be-matched command line template, and executes the template matching procedure again, where the fifth command line template is any command line template on which no template matching procedure has been performed in the template matching file.

In this embodiment of this application, because the accumulated quantity of times that the command line template in the target command line template set successfully matches the command line in the historical configuration information of the target network device reaches the target threshold of matching, a possibility that the first command line matches the command line template in the target command line template set is usually greater than a possibility that the first command line matches another command line template in the template matching file other than the target command line template set. In a process in which the first device determines, in the template matching file, the target command line template that matches the first command line, the first device first executes the template matching procedure on the command line template in the target command line template set, so that template matching efficiency can be improved.

Optionally, the command line template further includes a target content list, and the target content list includes one or more pieces of mandatory fixed content in a corresponding command line. In the template matching procedures of the foregoing two optional embodiments, before performing regular expression matching with the first command line by using the regular expression in the to-be-matched command line template, the first device first determines whether the first command line includes all content in a target content list in the to-be-matched command line template. When the first command line includes all the content in the target content list in the to-be-matched command line template, the first device performs regular expression matching with the first command line by using the regular expression in the to-be-matched command line template. When the first command line does not include any content in the target content list in the to-be-matched command line template, the first device determines that the to-be-matched command line template fails to match the first command line.

For example, a first command line is represented as "vni 5009 mcast-group 225.0.0.1". It is assumed that a tobe-matched command line template is shown in Table 1, and a target content list in the to-be-matched command line template includes "vni" and/or "mcast-group". The first device first determines whether the first command line includes "vni" and/or "mcast-group" in the target content list. Because the first command line includes "vni" and "mcast-group", the first device then performs regular expression matching with the first command line by using a regular expression "^vni (?P<vni_id>[^]^{∗}) mcast-group (?P[<ip_address> ]^{∗})$".

In this embodiment of this application, before performing regular expression matching with the first command line by using the regular expression, the first device first performs fuzzy matching with the first command line by using the mandatory fixed content in the target content list, so that to-be-matched command line templates can be preliminarily filtered, a quantity of command line templates used for regular expression matching is reduced, template matching efficiency can be improved, and computing resources can be saved.

Step 205: The first device creates, based on the target command line template and the first command line, the target network entity corresponding to the first command line.

A network entity usually has one or more attributes, and an attribute of the network entity is used to identify or represent the network entity. Optionally, a command line expression corresponding to the first command line includes one or more parameters. In other words, the target command line template includes one or more parameters. An implementation process of step 205 includes the following step 2051 and step 2052.

In step 2051, the first device generates one or more parameter key-value pairs based on the target command line template and the first command line, where the parameter key-value pair includes a parameter name of a parameter in the target command line template and a corresponding parameter value in the first command line.

Optionally, an arrangement sequence of the one or more parameter key-value pairs is consistent with a sequence indicated by the target command line template.

For example, a first command line is represented as "vni 5009 mcast-group 225.0.0.1", and a target command line template is shown in Table 1. The first device may generate two parameter key-value pairs, including {'vni-id': '5009', 'ip-address': '225.0.0. 1'}, where "vni-id" and "ip-address" are parameter names in the target command line template. "5009" in the first command line is a parameter value corresponding to "vni-id", and "225.0.0.1" in the first command line is a parameter value corresponding to "ip-address".

In step 2052, the first device creates the target network entity based on the one or more parameter key-value pairs.

Optionally, a name of the target network entity includes information about the first parameter key-value pair in the one or more parameter key-value pairs. For example, the name of the target network entity includes a parameter name and a parameter value in the first parameter key-value pair. The name of the target network entity may further include a name of the target network device. The name of the target network entity is not limited in this embodiment of this application.

For example, refer to the example in step 2051. The first parameter key-value pair in the two parameter key-value pairs generated by the first device is {'vni-id':'5009'}. The first device may create a target network entity of an entity type of vni based on the parameter key-value pair {'vni-id':'5009'}. A name of the target network entity may be: a name of the target network device+'vni-id-5009'. "ip-address=225.0.0.1" may be used as an attribute of the target network entity, and "vni-id=5009" may be used as the other attribute of the target network entity.

In this embodiment of this application, after determining, in the template matching file, the target command line template that matches the first command line, in other words, after performing step 204, the first device may obtain a target command line expression corresponding to the target command line template. Then, the first device determines, based on the target command line expression, whether a network entity needs to be created for the first command line. After determining that a network entity needs to be created for the first command line, the first device performs step 205.

In an optional embodiment of this application, an implementation process in which the first device determines, based on the target command line expression, whether a network entity needs to be created for the first command line includes: When a collection of entity-like ontologies includes the target command line expression, the first device determines that a network entity needs to be created for the first command line.

Optionally, the collection of entity-like ontologies may be generated by the first device, or the collection of entity-like ontologies may be generated by the second device and then sent to the first device. An implementation process in which the first device or the second device generates the collection of entity-like ontologies includes: obtaining, in the historical configuration information of the type of network device to which the target network device belongs, all historical command lines that correspond to network entities; and generating the collection of entity-like ontologies based on command line expressions corresponding to all the historical command lines. In other words, the collection of entity-like ontologies may include a command line expression corresponding to each historical command line that is in the historical configuration information of the type of network device to which the target network device belongs and that corresponds to a network entity. Alternatively, the collection of entity-like ontologies may be obtained based on expert experience.

The collection of entity-like ontologies includes a plurality of command line expressions. The collection of entity-like ontologies may further include a label of each command line expression. The label of the command line expression can be the first piece of fixed content in a corresponding command line. For example, the collection of entity-like ontologies provided in this embodiment of this application may be shown in Table 3.

**Table 3**

| Label (label) | Command line expression |
|---|---|
| bridge-domain | bridge-domain <bd-id> |
| vxlan vni | vxlan vni <vni-id> |
| router-id | router-id < ipv4-address > |
| ... | ... |

In this embodiment of this application, the collection of entity-like ontologies includes a plurality of corresponding command line expressions of corresponding command lines that correspond to network entities. The first device first determines, by determining whether the collection of entity-like ontologies has the target command line expression corresponding to the target command line template, whether a network entity needs to be created for the first command line. When determining that no network entity needs to be created for the first command line, the first device stops executing a procedure of creating the target network entity corresponding to the first command line. When determining that a network entity needs to be created for the first command line, the first device creates, based on the target command line template and the first command line, the target network entity corresponding to the first command line. Efficiency and accuracy of creating a network entity corresponding to a command line can be improved.

In another optional embodiment of this application, an implementation process in which the first device determines, based on the target command line expression, whether a network entity needs to be created for the first command line includes: The first device inputs the target command line expression to an entity discrimination model, to obtain a result output by the entity discrimination model based on the target command line expression. The result includes a first indication that a network entity needs to be created for the first command line or a second indication that no network entity needs to be created for the first command line. The entity discrimination model is obtained based on a plurality of sample command line expressions whose corresponding command lines are known to correspond to network entities or not. When the result includes the first indication, the first device determines that a network entity needs to be created for the first command line. When the result includes the second indication, the first device determines that no network entity needs to be created for the first command line.

For example, a result output by the entity discrimination model may be Y or N, where Y indicates that a network entity needs to be created for the first command line, and N indicates that no network entity needs to be created for the first command line. Alternatively, a result output by the entity discrimination model may be 0 or 1. An expression manner of the result output by the entity discrimination model is not limited in this embodiment of this application.

Optionally, the result output by the entity discrimination model based on the target command line expression further includes a third indication, where the third indication indicates that it is not determined whether a network entity needs to be created for the first command line. In this case, the first device determines, according to a preset determining rule, whether a network entity needs to be created for the first command line. The preset determining rule is related to a location relationship of a command line. For example, the preset determining rule may be: When a quantity of indented spaces of a next command line of the first command line is greater than a quantity of indented spaces of the first command line, it is determined that a network entity needs to be created for the first command line.

For example, a result output by the entity discrimination model may be Y, N, or W, where Y indicates that a network entity needs to be created for the first command line, N indicates that no network entity needs to be created for the first command line, and W indicates that it is not determined whether a network entity needs to be created for the first command line.

Optionally, the entity discrimination model may be generated by the first device, or the entity discrimination model may be generated by the second device and then sent to the first device. An implementation process in which the first device or the second device generates the entity discrimination model includes: obtaining a plurality of sample command line expressions whose corresponding command lines are known to correspond to network entities or not; and training, by using the plurality of sample command line expressions, to obtain the entity discrimination model. The entity discrimination model is a machine learning model obtained through training in a supervised learning manner.

In this embodiment of this application, the first device first determines, by using the entity discrimination model, whether a network entity needs to be created for the first command line. When determining that no network entity needs to be created for the first command line, the first device stops executing a procedure of creating the target network entity corresponding to the first command line. When determining that a network entity needs to be created for the first command line, the first device creates, based on the target command line template and the first command line, the target network entity corresponding to the first command line. Efficiency and accuracy of creating a network entity corresponding to a command line can be improved.

Optionally, after creating, based on the template matching file and the first command line in the first configuration information, the target network entity corresponding to the first command line, the first device may continue to perform the following step 206 to step 208.

Step 206: The first device determines, based on one or more attributes of the target network entity, an associated network entity that has an association relationship with the target network entity.

Optionally, the one or more attributes of the target network entity and one or more parameter key-value pairs generated by the first device based on the target command line template and the first command line are in a one-to-one correspondence. For example, refer to the example in step 205. The target network entity has two attributes: "ip-address=225.0.0.1" and "vni-id=5009".

In an optional embodiment of this application, an implementation process of step 206 includes the following step 2061a to step 2063a.

In step 2061a, the first device obtains a to-be-determined network entity from a network entity set.

The to-be-determined network entity meets: The to-be-determined network entity has a first attribute, the first attribute is any attribute of the target network entity, and an attribute meaning and an attribute value of the first attribute of the to-be-determined network entity are respectively the same as an attribute meaning and an attribute value of a first attribute of the target network entity. The network entity set includes a network entity created based on one or more other command lines in the first configuration information. In this embodiment of this application, a network entity may be created based on a command line in configuration information.

Optionally, an implementation process in which the first device obtains the to-be-determined network entity from the network entity set includes the following step a21 to step a23.

In step a21, the first device obtains one or more initial network entities from the network entity set.

The initial network entity has a to-be-determined attribute, and an attribute value of the to-be-determined attribute is the same as the attribute value of the first attribute of the target network entity. After creating the target network entity, the first device compares each attribute value of the target network entity with an attribute value of each network entity in the network entity set, to obtain the one or more initial network entities. The attribute value of the target network entity is a parameter value in the parameter key-value pair corresponding to the target network entity.

For example, the target network entity has two attributes: "ip-address=225.0.0.1" and "vni-id=5009". The first device uses a network entity that is in the network entity set and that has an attribute with an attribute value of 225.0.0.1 and/or an attribute with an attribute value of 5009 as the initial network entity.

Optionally, after creating the target network entity, the first device may further add the target network entity to the network entity set.

In step a22, when a text similarity between an attribute name of the to-be-determined attribute of the initial network entity and an attribute name of the first attribute of the target network entity is greater than a first threshold, and/or a text similarity between text content of the to-be-determined attribute in a command line expression corresponding to the initial network entity and text content of the first attribute in a command line expression corresponding to the target network entity is greater than a second threshold, the first device determines that an attribute meaning of the to-be-determined attribute is the same as the attribute meaning of the first attribute of the target network entity.

When the attribute value of the to-be-determined attribute of the initial network entity is the same as the attribute value of the first attribute of the target network entity, and the attribute meaning of the to-be-determined attribute is the same as the attribute meaning of the first attribute of the target network entity, the to-be-determined attribute of the initial network entity and the first attribute of the target network entity are a same attribute.

In step a23, the first device determines the initial network entity as the to-be-determined network entity.

Optionally, the first device uses a network entity that is in the network entity set and that has a parameter key-value pair corresponding to one or more target network entities as the to-be-determined network entity.

In step 2062a, the first device determines, according to an association relationship validity discrimination rule, whether an association relationship that is between the to-be-determined network entity and the target network entity and that is based on the first attribute is valid.

Optionally, the association relationship validity discrimination rule may be generated by the first device, or the association relationship validity discrimination rule may be generated by the second device and then sent to the first device. An implementation process in which the first device or the second device generates the association relationship validity discrimination rule includes: obtaining a sample network entity pair set, where the sample network entity pair set includes a plurality of sample network entity pairs that are known to have an association relationship or not and attributes of sample network entities in each sample network entity pair; and determining the association relationship validity discrimination rule based on the sample network entity pair set.

Optionally, the association relationship validity discrimination rule may be a machine learning model obtained through training in a supervised learning manner. An input of the machine learning model is a command line template corresponding to the to-be-determined network entity, and the target command line template and the first attribute that correspond to the target network entity, and an output result indicates whether the association relationship that is between the to-be-determined network entity and the target network entity and that is based on the first attribute is valid. For example, a result output by the machine learning model may be Y or N, where Y indicates that the association relationship that is between the to-be-determined network entity and the target network entity and that is based on the first attribute is valid, and N indicates that the association relationship that is between the to-be-determined network entity and the target network entity and that is based on the first attribute is invalid. Alternatively, a result output by the machine learning model may be 0 or 1. An expression manner of the result output by the machine learning model is not limited in this embodiment of this application.

For example, it is assumed that a to-be-determined network entity is "sysname_serviceleaf0-1-2-48.81_interface_Eth-Trunk1", and a target network entity is "sysname_serviceleaf0-1-2-48.81_interface_Eth-Tnznk2". An attribute of the to-be-determined network entity includes {interface_type=Eth-Trunk;interface_number=1}, and an attribute of the target network entity includes {interface_type=Eth-Trunk; interface_number=2}, where {interface_type=Eth-Trunk} is a common attribute of the to-be-determined network entity and the target network entity. It can be known, according to the association relationship validity discrimination rule, that the association relationship that is between the to-be-determined network entity and the target network entity and that is based on the common attribute is invalid.

It is still assumed that a to-be-determined network entity is "sysname_serviceleaf0-1-2-48.81_bridge-domain_5006" and a target network entity is "sysname_serviceleaf0-1-2-48.81_interface_Nve1_vni_5005_head-end_peer-list_protocol_ bgp". An attribute of the to-be-determined network entity includes: {bd_id=5006;vni_id=5005}, and an attribute of the target network entity includes: {vni_id=5005}, where {vni_id=5005} is a common attribute of the to-be-determined network entity and the target network entity. It can be known, according to the association relationship validity discrimination rule, that the association relationship that is between the to-be-determined network entity and the target network entity and that is based on the common attribute is valid.

In step 2063a, when the association relationship that is between the to-be-determined network entity and the target network entity and that is based on the first attribute is valid, the first device determines the to-be-determined network entity as the associated network entity.

In another optional embodiment of this application, an implementation process of step 206 includes the following step 2061b to step 2063b.

In step 2061b, the first device obtains, from a valid relationship type set, a target valid relationship type group including the type of the target network entity.

The valid relationship type set includes a plurality of valid relationship type groups, and each valid relationship type group includes two entity types and one attribute pair. The two entity types are types of two network entities having an association relationship. The attribute pair includes two attributes enabling the two network entities to have an association relationship, attribute meanings of the two attributes are the same, and attribute names of the two attributes may be the same or different.

For example, the valid relationship type set provided in this embodiment of this application may be shown in Table 4.

**Table 4**

| Entity type 1 | Entity type 2 | Attribute pair |
|---|---|---|
| bgp (protocol) | interface (interface) | ipv4-address<--> ipv-address-mask |
| ... | ... | ... |

Refer to Table 4. Two entity types in a valid relationship type group are "bgp" and "interface", and an attribute pair is "ipv4-address<--> ipv-address-mask", where "ipv4-address" is an attribute of "bgp", and "ipv-address-mask" is an attribute of "interface". The valid relationship type group represents that a network entity whose entity type is "bgp" based on the attribute "ipv4-address" may be associated with a network entity whose entity type is "interface" based on the attribute "ipv-address-mask".

Optionally, the valid relationship type set may be generated by the first device, or the valid relationship type set may be generated by the second device and then sent to the first device. An implementation process in which the first device or the second device generates the valid relationship type set includes: obtaining a historical valid relationship set, where the historical valid relationship set includes a plurality of historical valid relationship groups, each historical valid relationship group includes two historical network entities having an association relationship and one or more historical attribute pairs enabling the two historical network entities to have an association relationship, and each historical attribute pair separately includes one attribute of the two historical network entities; and generating the valid relationship type group in the valid relationship type set based on types of the two historical network entities having an association relationship and the historical attribute pair enabling the two historical network entities to have an association relationship that are in the historical valid relationship group.

In step 2062b, the first device obtains a to-be-determined network entity based on a target valid relationship type group.

Two entity types in the target valid relationship type group are the type of the target network entity and a type of the to-be-determined network entity. For example, it is assumed that an entity type of a target network entity is interface. In this case, the first device determines a network entity whose entity type is bgp as the to-be-determined network entity.

In step 2063b, when an attribute value of a second attribute of the to-be-determined network entity is the same as an attribute value of a third attribute of the target network entity, the first device determines the to-be-determined network entity as the associated network entity.

The second attribute is an attribute corresponding to the type of the to-be-determined network entity in an attribute pair of the target valid relationship type group, and the third attribute is an attribute corresponding to the type of the target network entity in the attribute pair of the target valid relationship type group.

For example, refer to the example in step 2062b. A second attribute of the to-be-determined network entity is "ipv4-address", and a third attribute of the target network entity is "ipv-address-mask". An implementation process of step 2063b includes: The first device determines whether the network entity whose entity type is bgp has the attribute "ipv4-address". When the network entity whose entity type is bgp has the attribute "ipv4-address" and an attribute value of the attribute "ipv4-address" is the same as an attribute value of the attribute "ipv-address-mask" of the target network entity, the first device determines the network entity as the associated network entity.

In this embodiment of this application, because the valid relationship type group includes two entity types and one attribute pair that enables network entities of the two entity types to have an association relationship, an associated network entity of a network entity may be searched in a directional manner based on the valid relationship type group, so that efficiency of determining the associated network entity of the network entity is high and a few computing resources are consumed.

Step 207: The first device generates a knowledge graph triplet based on the target network entity, the associated network entity, and the association relationship between the target network entity and the associated network entity.

Optionally, the knowledge graph triplet is represented in a graph form. The knowledge graph triplet includes two basic elements, namely, a point and an edge, where the point represents a network entity, and the edge represents an association relationship between two network entities. The edge on the knowledge graph triplet may be directional or directionless. The edge on the knowledge graph triplet may further indicate a specific relationship, for example, a dependency relationship or an equivalence relationship, between two network entities. For example, when two network entities are in an equivalence relationship, a directionless edge may be used to connect the two network entities. When two network entities are in a dependency relationship, a directional edge (for example, an arrow) may be used to connect the two network entities, where a direction of the edge points from a dependent network entity to a depended network entity. The association relationship between the network entities in step 206 is usually an equivalence relationship. The dependency relationship between the network entities may be determined based on a location relationship between corresponding command lines in the configuration information.

Step 208: The first device constructs, based on the knowledge graph triplet, the knowledge graph of the network in which the target network device is located.

A sequence of steps of the method for constructing a knowledge graph provided in this embodiment of this application may be properly adjusted. For example, step 203 may alternatively be performed before step 201 or step 202. Alternatively, a step may be correspondingly added or deleted based on a case. Any variation method readily figured out by a person skilled in the art within the technical scope disclosed in this application shall fall within the protection scope of this application. Therefore, details are not described herein.

In conclusion, in the method for constructing a knowledge graph provided in this embodiment of this application, a first device creates, based on a template matching file corresponding to a network device, a network entity corresponding to a command line in configuration information of the network device. Because the template matching file can describe a format of the command line in the configuration information, the network entity corresponding to the command line in the configuration information can be accurately created based on the template matching file. In addition, because the network entity corresponding to the command line is associated with a command line template, a specific meaning of the created network entity may be determined based on the command line template, and then an association relationship between network entities may be determined, to construct, based on the configuration information of the network device, a knowledge graph of a network in which the network device is located.

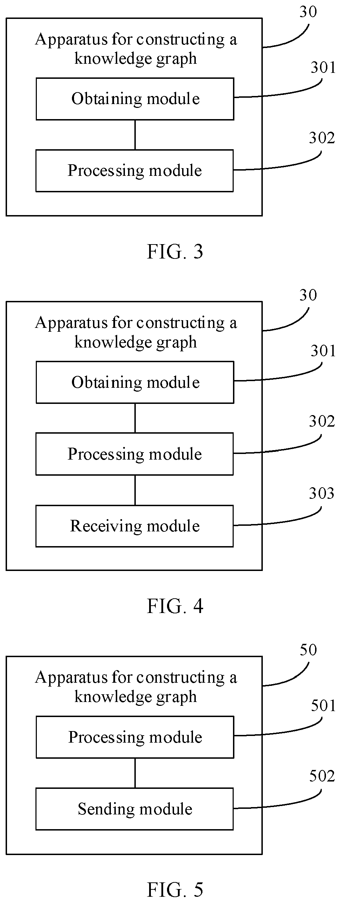

FIG. 3 is a schematic diagram of a structure of an apparatus for constructing a knowledge graph according to an embodiment of this application. The apparatus may be applied to the first device 101 in the system shown in FIG. 1. As shown in FIG. 3, the apparatus 30 includes:
an obtaining module 301, configured to obtain first configuration information of a target network device, where
the obtaining module 301 is further configured to obtain a template matching file corresponding to the target network device, where the template matching file is used to describe one or more formats of one or more command lines in configuration information of a type of network device to which the target network device belongs; and
a processing module 302, configured to create, based on the template matching file and a first command line in the first configuration information, a target network entity corresponding to the first command line, where a type of the target network entity is a device, an interface, a protocol, or a service, and the target network entity is configured to construct a knowledge graph of a network in which the target network device is located.

Optionally, the template matching file includes a plurality of command line templates, and each command line template is used to describe a format of a command line in the configuration information of the type of network device, and the processing module 302 is configured to:
determine, in the template matching file, a target command line template that matches the first command line; and create the target network entity based on the target command line template and the first command line.

Optionally, the command line template is obtained based on a command line expression. The command line template includes all content in the command line expression, and the command line template can indicate a sequence of content included in a corresponding command line in the command line. The command line expression includes a description of the corresponding command line in the configuration information of the type of network device.

Optionally, that the first command line matches the target command line template includes: The first command line includes all mandatory content in the target command line template, and a sequence of the content included in the first command line is consistent with a sequence indicated by the target command line template.

Optionally, a command line expression corresponding to the first command line includes one or more parameters, and the processing module 302 is configured to:
generate one or more parameter key-value pairs based on the target command line template and the first command line, where the parameter key-value pair includes a parameter name of a parameter in the target command line template and a corresponding parameter value in the first command line; and create the target network entity based on the one or more parameter key-value pairs.

Optionally, an arrangement sequence of the one or more parameter key-value pairs is consistent with a sequence indicated by the target command line template, and a name of the target network entity includes information about the first parameter key-value pair in the one or more parameter key-value pairs.

Optionally, the command line template is obtained based on the command line expression, the command line template includes a regular expression of the command line expression, and the processing module 302 is configured to:
use a first command line template in the template matching file as a tobe-matched command line template, where the first command line template is any command line template in the template matching file; and execute a template matching procedure on the to-be-matched command line template, where the template matching procedure includes:
performing regular expression matching with the first command line by using a regular expression in the to-be-matched command line template; and when the regular expression successfully matches the first command line, using the to-be-matched command line template as the target command line template; or when the regular expression fails to match the first command line, using a second command line template in the template matching file as a new to-be-matched command line template, and executing the template matching procedure again, where the second command line template is any command line template on which no template matching procedure has been performed in the template matching file.

Optionally, the command line template is obtained based on the command line expression, the command line template includes a regular expression of the command line expression, and the processing module 302 is configured to:
use a third command line template in a target command line template set as a to-be-matched command line template, where the target command line template set includes a command line template that is in the template matching file and that successfully matches a command line in historical configuration information of the type of network device, and the third command line template is any command line template in the target command line template set; and execute a template matching procedure on the to-be-matched command line template, where the template matching procedure includes:
performing regular expression matching with the first command line by using a regular expression in the to-be-matched command line template; and when the regular expression successfully matches the first command line, using the to-be-matched command line template as the target command line template; or when the regular expression fails to match the first command line, if the target command line template set includes a fourth command line template, using the fourth command line template as a new to-be-matched command line template, and executing the template matching procedure again; or if the target command line template set does not include the fourth command line template, using a fifth command line template as a new to-be-matched command line template, and executing the template matching procedure again, where the fourth command line template is any command line template on which no template matching procedure has been performed in the target command line template set, and the fifth command line template is any command line template on which no template matching procedure has been performed in the template matching file.

Optionally, the obtaining module 301 is further configured to obtain, from the template matching file, a plurality of command line templates that successfully match command lines in the historical configuration information of the type of network device. The processing module 302 is further configured to use, as a command line template in the target command line template set, a command line template that is in the plurality of command line templates and whose accumulated quantity of times of successfully matching the command line in the historical configuration information of the type of network device reaches a target threshold of matching.

Optionally, the command line template further includes a target content list, the target content list includes one or more pieces of mandatory fixed content in a corresponding command line, and the processing module 302 is configured to: when the first command line includes all content in a target content list in the to-be-matched command line template, perform regular expression matching with the first command line by using the regular expression in the to-be-matched command line template.

Optionally, the processing module 302 is further configured to: when the first command line does not include any content in the target content list in the to-be-matched command line template, determine that the to-be-matched command line template fails to match the first command line.

Optionally, the command line template is obtained based on the command line expression. The obtaining module 301 is further configured to obtain a target command line expression corresponding to the target command line template. The processing module 302 is further configured to: determine, based on the target command line expression, whether a network entity needs to be created for the first command line, and after it is determined that a network entity needs to be created for the first command line, create the target network entity based on the target command line template and the first command line.

Optionally, the processing module 302 is configured to:
when a collection of entity-like ontologies includes the target command line expression, determine that a network entity needs to be created for the first command line.

Optionally, the obtaining module 301 is further configured to obtain, in the historical configuration information of the type of network device, all historical command lines that correspond to network entities; and the processing module 302 is further configured to generate a collection of entity-like ontologies based on command line expressions corresponding to all the historical command lines.

Optionally, the processing module 302 is configured to: input the target command line expression to an entity discrimination model, to obtain a result output by the entity discrimination model based on the target command line expression, where the result includes a first indication that a network entity needs to be created for the first command line or a second indication that no network entity needs to be created for the first command line, and the entity discrimination model is obtained based on a plurality of sample command line expressions whose corresponding command lines are known to correspond to network entities or not; and when the result includes the first indication, determine that a network entity needs to be created for the first command line, or when the result includes the second indication, determine that no network entity needs to be created for the first command line.

Optionally, the obtaining module 301 is further configured to obtain the plurality of sample command line expressions whose corresponding command lines are known to correspond to network entities or not. The processing module 302 is further configured to train, by using the plurality of sample command line expressions, to obtain the entity discrimination model.

Optionally, the processing module 302 is further configured to: determine, based on one or more attributes of the target network entity, an associated network entity that has an association relationship with the target network entity; generate a knowledge graph triplet based on the target network entity, the associated network entity, and the association relationship; and construct, based on the knowledge graph triplet, the knowledge graph of the network in which the target network device is located.

Optionally, the processing module 302 is configured to: obtain a to-be-determined network entity from a network entity set, where the to-be-determined network entity meets: the to-be-determined network entity has a first attribute, the first attribute is any attribute of the target network entity, and an attribute meaning and an attribute value of the first attribute of the to-be-determined network entity are respectively the same as an attribute meaning and an attribute value of a first attribute of the target network entity; and the network entity set includes a network entity created based on one or more other command lines in the first configuration information; determine, according to an association relationship validity discrimination rule, whether an association relationship that is between the to-be-determined network entity and the target network entity and that is based on the first attribute is valid; and when the association relationship that is between the to-be-determined network entity and the target network entity and that is based on the first attribute is valid, determine the to-be-determined network entity as the associated network entity.

Optionally, the processing module 302 is configured to: obtain one or more initial network entities from the network entity set, where the initial network entity has a to-be-determined attribute, and an attribute value of the to-be-determined attribute is the same as the attribute value of the first attribute of the target network entity; when a text similarity between an attribute name of the to-be-determined attribute of the initial network entity and an attribute name of the first attribute of the target network entity is greater than a first threshold, and/or a text similarity between text content of the to-be-determined attribute in a command line expression corresponding to the initial network entity and text content of the first attribute in a command line expression corresponding to the target network entity is greater than a second threshold, determine that an attribute meaning of the to-be-determined attribute is the same as the attribute meaning of the first attribute of the target network entity; and determine the initial network entity as the to-be-determined network entity.

Optionally, the obtaining module 301 is further configured to obtain a sample network entity pair set, where the sample network entity pair set includes a plurality of sample network entity pairs that are known to have an association relationship or not and attributes of sample network entities in each sample network entity pair; and the processing module 302 is further configured to determine the association relationship validity discrimination rule based on the sample network entity pair set.

Optionally, the processing module 302 is configured to: obtain, from a valid relationship type set, a target valid relationship type group including the type of the target network entity, where the valid relationship type set includes a plurality of valid relationship type groups, each valid relationship type group includes two entity types and one attribute pair, the two entity types are types of two network entities having an association relationship, the attribute pair includes two attributes enabling the two network entities to have an association relationship, and the two attributes have a same attribute meaning; obtain a to-be-determined network entity based on the target valid relationship type group, where two entity types in the target valid relationship type group are the type of the target network entity and a type of the to-be-determined network entity; and when an attribute value of a second attribute of the to-be-determined network entity is the same as an attribute value of a third attribute of the target network entity, determine the to-be-determined network entity as the associated network entity, where the second attribute is an attribute corresponding to the type of the to-be-determined network entity in an attribute pair of the target valid relationship type group, and the third attribute is an attribute corresponding to the type of the target network entity in the attribute pair of the target valid relationship type group.

Optionally, the obtaining module 301 is further configured to obtain a historical valid relationship set, where the historical valid relationship set includes a plurality of historical valid relationship groups, each historical valid relationship group includes two historical network entities having an association relationship and one or more historical attribute pairs enabling the two historical network entities to have an association relationship, and each historical attribute pair separately includes one attribute of the two historical network entities; and the processing module 302 is further configured to generate the valid relationship type group in the valid relationship type set based on types of the two historical network entities having an association relationship and the historical attribute pair enabling the two historical network entities to have an association relationship that are in the historical valid relationship group.

Optionally, the obtaining module 301 is configured to generate the template matching file.

Optionally, the obtaining module 301 is configured to: obtain a product manual of the type of network device, where the product manual includes a plurality of command line expressions, and each command line expression includes a description of a command line in the configuration information of the type of network device; and generate, for each command line expression in the product manual, a command line template based on the command line expression, to obtain the template matching file, where the command line template includes one or more of the command line expression, a regular expression of the command line expression, and the target content list, and the target content list includes the one or more pieces of mandatory fixed content in a corresponding command line.

Optionally, as shown in FIG. 4, an apparatus 40 further includes:
a receiving module 303, configured to receive one or more of the template matching file, the association relationship validity discrimination rule, the valid relationship type set, the target command line template set, the collection of entity-like ontologies, or the entity discrimination model that is sent by a second device.

Optionally, the type of network device has a same model.

Optionally, the type of network device has a same product version.

Optionally, the first device is a management device, and the obtaining module 301 is configured to receive the first configuration information sent by the target network device.

In conclusion, in the apparatus for constructing a knowledge graph provided in this embodiment of this application, a first device creates, by using a processing module based on a template matching file corresponding to a network device, a network entity corresponding to a command line in configuration information of the network device. Because the template matching file can describe a format of the command line in the configuration information, the network entity corresponding to the command line in the configuration information can be accurately created based on the template matching file. In addition, because the network entity corresponding to the command line is associated with a command line template, a specific meaning of the created network entity may be determined based on the command line template, and then an association relationship between network entities may be determined, to construct, based on the configuration information of the network device, a knowledge graph of a network in which the network device is located.

FIG. 5 is a schematic diagram of a structure of still another apparatus for constructing a knowledge graph according to an embodiment of this application. The apparatus may be applied to the second device 102 in the system shown in FIG. 1. As shown in FIG. 5, the apparatus 50 includes:
a processing module 501, configured to generate a template matching file corresponding to a type of network device, where the template matching file is used to describe one or more formats of one or more command lines in configuration information of the type of network device; and
a sending module 502, configured to send the template matching file to a first device, to enable the first device to create a network entity corresponding to a command line in configuration information of any network device with the type of network device, where a type of the network entity is a device, an interface, a protocol, or a service.

Optionally, the processing module 501 is configured to: obtain a product manual of the type of network device, where the product manual includes a plurality of command line expressions, and each command line expression includes a description of a command line in the configuration information of the type of network device; and generate, for each command line expression in the product manual, a command line template based on the command line expression, to obtain the template matching file, where the command line template includes one or more of the command line expression, a regular expression of the command line expression, and a target content list, and the target content list includes one or more pieces of mandatory fixed content in a corresponding command line.

Optionally, the processing module 501 is further configured to: obtain a sample network entity pair set, and determine an association relationship validity discrimination rule based on the sample network entity pair set, where the sample network entity pair set includes a plurality of sample network entity pairs that are known to have an association relationship or not and attributes of sample network entities in each sample network entity pair; and the sending module 502 is further configured to send the association relationship validity discrimination rule to the first device.

Optionally, the processing module 501 is further configured to obtain a historical valid relationship set, where the historical valid relationship set includes a plurality of historical valid relationship groups, each historical valid relationship group includes two historical network entities having an association relationship and one or more historical attribute pairs enabling the two historical network entities to have an association relationship, and each historical attribute pair separately includes one attribute of the two historical network entities; the processing module 501 is further configured to generate the valid relationship type group based on types of the two historical network entities having an association relationship and the historical attribute pair enabling the two historical network entities to have an association relationship that are in the historical valid relationship group; and the sending module 502 is further configured to send a valid relationship type set to the first device, where the valid relationship type set includes a plurality of valid relationship type groups.

Optionally, the template matching file includes a plurality of command line templates, and each command line template is used to describe a format of a command line in the configuration information of the type of network device. The processing module 501 is further configured to: obtain, from the template matching file, a plurality of command line templates that successfully match command lines in historical configuration information of the type of network device, and use, as a command line template in a target command line template set, a command line template that is in the plurality of command line templates and whose accumulated quantity of times of successfully matching the command line in the historical configuration information of the type of network device reaches a target threshold of matching. The sending module 502 is further configured to send the target command line template set to the first device.

Optionally, the processing module 501 is further configured to: obtain, in the historical configuration information of the type of network device, all historical command lines that correspond to network entities; and generate a collection of entity-like ontologies based on command line expressions corresponding to all the historical command lines. The sending module 502 is further configured to send the collection of entity-like ontologies to the first device.

Optionally, the processing module 501 is further configured to: obtain a plurality of sample command line expressions whose corresponding command lines are known to correspond to network entities or not, and train, by using the plurality of sample command line expressions, to obtain an entity discrimination model; and the sending module 502 is further configured to send the entity discrimination model to the first device.

In conclusion, in the apparatus for constructing a knowledge graph provided in this embodiment of this application, a first device creates, based on a template matching file corresponding to a network device, a network entity corresponding to a command line in configuration information of the network device. Because the template matching file can describe a format of the command line in the configuration information, the network entity corresponding to the command line in the configuration information can be accurately created based on the template matching file. In addition, because the network entity corresponding to the command line is associated with a command line template, a specific meaning of the created network entity may be determined based on the command line template, and then an association relationship between network entities may be determined, to construct, based on the configuration information of the network device, a knowledge graph of a network in which the network device is located.

For the apparatus in the foregoing embodiment, specific manners of executing operations by each module are described in detail in embodiments related to the method, and details are not described herein.

An embodiment of this application provides a computer device, including a processor and a memory, where
the memory is configured to store a computer program, and the computer program includes program instructions; and
the processor is configured to invoke the computer program to implement the actions performed by the first device in the foregoing method embodiments.

An embodiment of this application further provides another computer device, including a processor and a memory, where
the memory is configured to store a computer program, and the computer program includes program instructions; and
the processor is configured to invoke the computer program to implement the actions performed by the second device in the foregoing method embodiments.

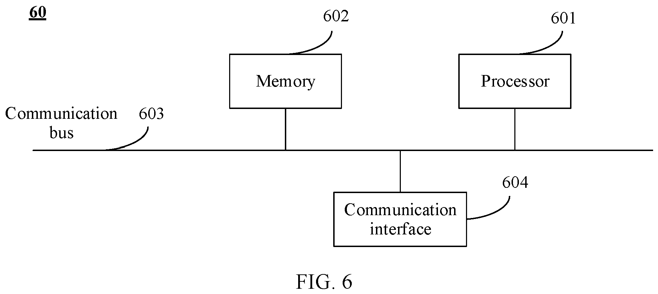

FIG. 6 is a block diagram of a computer device according to an embodiment of this application. The computer device may be the first device or the second device in embodiments of this application, and may be specifically a network device, a management device, or a cloud device. As shown in FIG. 6, a computer device 60 includes a processor 601 and a memory 602.

The memory 602 is configured to store a computer program, where the computer program includes program instructions.

The processor 601 is configured to invoke the computer program to implement the actions performed by the first device or the actions performed by the second device in the foregoing method embodiments.

Optionally, the computer device 60 further includes a communication bus 603 and a communication interface 604.

The processor 601 includes one or more processing cores, and the processor 601 executes various functional applications and performs data processing by running the computer program.

The memory 602 may be configured to store the computer program. Optionally, the memory may store an operating system and an application program unit that is required for at least one function. The operating system may be an operating system such as a real time operating system (Real Time executive, RTX), LINUX, UNIX, WINDOWS, or OS X.

There may be a plurality of communication interfaces 604, and the communication interface 604 is configured to communicate with another device. For example, in embodiments of this application, the communication interface 604 of the second device may be configured to send one or more of a template matching file, an association relationship validity discrimination rule, a valid relationship type set, a target command line template set, a collection of entity-like ontologies, or an entity discrimination model to the first device.

The memory 602 and the communication interface 604 are connected to the processor 601 by using the communication bus 603.

An embodiment of this application further provides a system for constructing a knowledge graph. The system includes a first device and a second device. The first device includes the apparatus shown in FIG. 3 or FIG. 4 or the computer device shown in FIG. 6. The second device includes the apparatus shown in FIG. 5 or the computer device shown in FIG. 6.

An embodiment of this application further provides a computer storage medium. The computer storage medium stores instructions. When the instructions are executed by a processor, the actions performed by the first device or the actions performed by the second device in the foregoing method embodiments are implemented.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

In embodiments of this application, the terms "first", "second", and "third" are merely used for description, but cannot be understood as an indication or implication of relative importance.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The foregoing descriptions are only optional embodiments of this application, but are not intended to limit this application. Any modification, equivalent replacement, or improvement made within the concept and principle of this application should fall within the protection scope of this application.

## Claims

1. A method for constructing a knowledge graph, for a first device, wherein the method comprises:
obtaining first configuration information of a target network device;
obtaining a template matching file corresponding to the target network device, wherein the template matching file is used to describe one or more formats of one or more command lines in configuration information of a type of network device to which the target network device belongs; and
creating, based on the template matching file and a first command line in the first configuration information, a target network entity corresponding to the first command line, wherein a type of the target network entity is a device, an interface, a protocol, or a service, and the target network entity is configured to construct a knowledge graph of a network in which the target network device is located.

2. The method according to claim 1, wherein the template matching file comprises a plurality of command line templates, and each command line template is used to describe a format of a command line in the configuration information of the type of network device; and the creating, based on the template matching file and a first command line in the first configuration information, a target network entity corresponding to the first command line comprises:
determining, in the template matching file, a target command line template that matches the first command line; and
creating the target network entity based on the target command line template and the first command line.

3. The method according to claim 2, wherein the command line template is obtained based on a command line expression, the command line template comprises all content in the command line expression, the command line template can indicate a sequence of content included in a corresponding command line in the command line, and the command line expression comprises a description of the corresponding command line in the configuration information of the type of network device.

4. The method according to claim 3, wherein that the first command line matches the target command line template comprises: the first command line comprises all mandatory content in the target command line template, and a sequence of the content included in the first command line is consistent with a sequence indicated by the target command line template.

5. The method according to claim 3 or 4, wherein a command line expression corresponding to the first command line comprises one or more parameters, and the creating the target network entity based on the target command line template and the first command line comprises:
generating one or more parameter key-value pairs based on the target command line template and the first command line, wherein the parameter key-value pair comprises a parameter name of a parameter in the target command line template and a corresponding parameter value in the first command line; and
creating the target network entity based on the one or more parameter key-value pairs.

6. The method according to claim 5, wherein an arrangement sequence of the one or more parameter key-value pairs is consistent with a sequence indicated by the target command line template, and a name of the target network entity comprises information about the first parameter key-value pair in the one or more parameter key-value pairs.

7. The method according to any one of claims 2 to 6, wherein the command line template is obtained based on the command line expression, the command line template comprises a regular expression of the command line expression, and the determining, in the template matching file, a target command line template that matches the first command line comprises:
using a first command line template in the template matching file as a to-be-matched command line template, wherein the first command line template is any command line template in the template matching file; and
executing a template matching procedure on the to-be-matched command line template, wherein the template matching procedure comprises:
performing regular expression matching with the first command line by using a regular expression in the to-be-matched command line template; and
when the regular expression successfully matches the first command line, using the to-be-matched command line template as the target command line template; or
when the regular expression fails to match the first command line, using a second command line template in the template matching file as a new to-be-matched command line template, and executing the template matching procedure again, wherein the second command line template is any command line template on which no template matching procedure has been executed in the template matching file.

8. The method according to any one of claims 2 to 6, wherein the command line template is obtained based on the command line expression, the command line template comprises a regular expression of the command line expression, and the determining, in the template matching file, a target command line template that matches the first command line comprises:
using a third command line template in a target command line template set as a to-be-matched command line template, wherein the target command line template set comprises a command line template that is in the template matching file and that successfully matches a command line in historical configuration information of the type of network device, and the third command line template is any command line template in the target command line template set; and
executing a template matching procedure on the to-be-matched command line template, wherein the template matching procedure comprises:
performing regular expression matching with the first command line by using a regular expression in the to-be-matched command line template; and
when the regular expression successfully matches the first command line, using the to-be-matched command line template as the target command line template; or
when the regular expression fails to match the first command line, if the target command line template set comprises a fourth command line template, using the fourth command line template as a new to-be-matched command line template, and executing the template matching procedure again; or if the target command line template set does not comprise the fourth command line template, using a fifth command line template as a new to-be-matched command line template, and executing the template matching procedure again, wherein
the fourth command line template is any command line template on which no template matching procedure has been performed in the target command line template set, and the fifth command line template is any command line template on which no template matching procedure has been performed in the template matching file.

9. The method according to claim 8, wherein the method further comprises:
obtaining, from the template matching file, a plurality of command line templates that successfully match command lines in the historical configuration information of the type of network device; and
using, as a command line template in the target command line template set, a command line template that is in the plurality of command line templates and whose accumulated quantity of times of successfully matching the command line in the historical configuration information of the type of network device reaches a target threshold of matching.

10. The method according to any one of claims 7 to 9, wherein the command line template further comprises a target content list, the target content list comprises one or more pieces of mandatory fixed content in a corresponding command line, and the performing regular expression matching with the first command line by using a regular expression in the to-be-matched command line template comprises:
when the first command line comprises all content in a target content list in the to-be-matched command line template, performing regular expression matching with the first command line by using the regular expression in the to-be-matched command line template.

11. The method according to claim 10, wherein the method further comprises:
when the first command line does not comprise any content in the target content list in the to-be-matched command line template, determining that the to-be-matched command line template fails to match the first command line.

12. The method according to any one of claims 2 to 11, wherein the command line template is obtained based on the command line expression, and after the determining, in the template matching file, a target command line template that matches the first command line, the method further comprises:
obtaining a target command line expression corresponding to the target command line template; and
determining, based on the target command line expression, whether a network entity needs to be created for the first command line; and
the creating the target network entity based on the target command line template and the first command line comprises:
after it is determined that a network entity needs to be created for the first command line, creating the target network entity based on the target command line template and the first command line.

13. The method according to claim 12, wherein the determining, based on the target command line expression, whether a network entity needs to be created for the first command line comprises:
when a collection of entity-like ontologies comprises the target command line expression, determining that a network entity needs to be created for the first command line.

14. The method according to claim 13, wherein the method further comprises:
obtaining, in the historical configuration information of the type of network device, all historical command lines that correspond to network entities; and
generating the collection of entity-like ontologies based on command line expressions corresponding to all the historical command lines.

15. The method according to claim 12, wherein the determining, based on the target command line expression, whether a network entity needs to be created for the first command line comprises:
inputting the target command line expression to an entity discrimination model to obtain a result output by the entity discrimination model based on the target command line expression, wherein the result comprises a first indication that a network entity needs to be created for the first command line or a second indication that no network entity needs to be created for the first command line, and the entity discrimination model is obtained based on a plurality of sample command line expressions whose corresponding command lines are known to correspond to network entities or not; and
when the result comprises the first indication, determining that a network entity needs to be created for the first command line; or
when the result comprises the second indication, determining that no network entity needs to be created for the first command line.

16. The method according to claim 15, wherein the method further comprises:
obtaining the plurality of sample command line expressions whose corresponding command lines are known to correspond to network entities or not; and
training, by using the plurality of sample command line expressions, to obtain the entity discrimination model.

17. The method according to any one of claims 1 to 16, wherein after the creating, based on the template matching file and a first command line in the first configuration information, a target network entity corresponding to the first command line, the method further comprises:
determining, based on one or more attributes of the target network entity, an associated network entity that has an association relationship with the target network entity;
generating a knowledge graph triplet based on the target network entity, the associated network entity, and the association relationship; and
constructing, based on the knowledge graph triplet, the knowledge graph of the network in which the target network device is located.

18. The method according to claim 17, wherein the determining, based on one or more attributes of the target network entity, an associated network entity that has an association relationship with the target network entity comprises:
obtaining a to-be-determined network entity from a network entity set, wherein the to-be-determined network entity meets: the to-be-determined network entity has a first attribute, the first attribute is any attribute of the target network entity, and an attribute meaning and an attribute value of the first attribute of the to-be-determined network entity are respectively the same as an attribute meaning and an attribute value of a first attribute of the target network entity; and the network entity set comprises a network entity created based on one or more other command lines in the first configuration information;
determining, according to an association relationship validity discrimination rule, whether an association relationship that is between the to-be-determined network entity and the target network entity and that is based on the first attribute is valid; and
when the association relationship that is between the to-be-determined network entity and the target network entity and that is based on the first attribute is valid, determining the to-be-determined network entity as the associated network entity.

19. The method according to claim 18, wherein the obtaining a to-be-determined network entity from a network entity set comprises:
obtaining one or more initial network entities from the network entity set, wherein the initial network entity has a to-be-determined attribute, and an attribute value of the to-be-determined attribute is the same as the attribute value of the first attribute of the target network entity;
when a text similarity between an attribute name of the to-be-determined attribute of the initial network entity and an attribute name of the first attribute of the target network entity is greater than a first threshold, and/or a text similarity between text content of the to-be-determined attribute in a command line expression corresponding to the initial network entity and text content of the first attribute in a command line expression corresponding to the target network entity is greater than a second threshold, determining that an attribute meaning of the to-be-determined attribute is the same as the attribute meaning of the first attribute of the target network entity; and
determining the initial network entity as the to-be-determined network entity.

20. The method according to claim 18 or 19, wherein the method further comprises:
obtaining a sample network entity pair set, wherein the sample network entity pair set comprises a plurality of sample network entity pairs that are known to have an association relationship or not and attributes of sample network entities in each sample network entity pair; and
determining the association relationship validity discrimination rule based on the sample network entity pair set.

21. The method according to claim 17, wherein the determining, based on one or more attributes of the target network entity, an associated network entity that has an association relationship with the target network entity comprises:
obtaining, from a valid relationship type set, a target valid relationship type group comprising the type of the target network entity, wherein the valid relationship type set comprises a plurality of valid relationship type groups, each valid relationship type group comprises two entity types and one attribute pair, the two entity types are types of two network entities having an association relationship, the attribute pair comprises two attributes enabling the two network entities to have an association relationship, and the two attributes have a same attribute meaning;
obtaining a to-be-determined network entity based on the target valid relationship type group, wherein two entity types in the target valid relationship type group are the type of the target network entity and a type of the to-be-determined network entity; and
when an attribute value of a second attribute of the to-be-determined network entity is the same as an attribute value of a third attribute of the target network entity, determining the to-be-determined network entity as the associated network entity, wherein the second attribute is an attribute corresponding to the type of the to-be-determined network entity in an attribute pair of the target valid relationship type group, and the third attribute is an attribute corresponding to the type of the target network entity in the attribute pair of the target valid relationship type group.

22. The method according to claim 21, wherein the method further comprises:
obtaining a historical valid relationship set, wherein the historical valid relationship set comprises a plurality of historical valid relationship groups, each historical valid relationship group comprises two historical network entities having an association relationship and one or more historical attribute pairs enabling the two historical network entities to have an association relationship, and each historical attribute pair separately comprises one attribute of the two historical network entities; and
generating the valid relationship type group in the valid relationship type set based on types of the two historical network entities having an association relationship and the historical attribute pair enabling the two historical network entities to have an association relationship that are in the historical valid relationship group.

23. The method according to any one of claims 1 to 22, wherein the obtaining a template matching file corresponding to the target network device comprises:
generating the template matching file.

24. The method according to claim 23, wherein the generating the template matching file comprises:
obtaining a product manual of the type of network device, wherein the product manual comprises a plurality of command line expressions, and each command line expression comprises a description of a command line in the configuration information of the type of network device; and
generating, for each command line expression in the product manual, a command line template based on the command line expression, to obtain the template matching file, wherein the command line template comprises one or more of the command line expression, a regular expression of the command line expression, and the target content list, and the target content list comprises the one or more pieces of mandatory fixed content in the corresponding command line.

25. The method according to any one of claims 1 to 24, wherein the method further comprises:
receiving one or more of the template matching file, the association relationship validity discrimination rule, the valid relationship type set, the target command line template set, the collection of entity-like ontologies, or the entity discrimination model that is sent by a second device.

26. The method according to any one of claims 1 to 25, wherein the type of network device has a same model.

27. The method according to claim 26, wherein the type of network device has a same product version.

28. The method according to any one of claims 1 to 27, wherein the first device is a management device, and the obtaining first configuration information of a target network device comprises:
receiving the first configuration information sent by the target network device.

29. A method for constructing a knowledge graph, for a second device, wherein the method comprises:
generating a template matching file corresponding to a type of network device, wherein the template matching file is used to describe one or more formats of one or more command lines in configuration information of the type of network device; and
sending the template matching file to a first device, to enable the first device to create a network entity corresponding to a command line in configuration information of any network device with the type of network device, wherein a type of the network entity is a device, an interface, a protocol, or a service.

30. The method according to claim 29, wherein the method further comprises:
obtaining a sample network entity pair set, wherein the sample network entity pair set comprises a plurality of sample network entity pairs that are known to have an association relationship or not and attributes of sample network entities in each sample network entity pair;
determining an association relationship validity discrimination rule based on the sample network entity pair set; and
sending the association relationship validity discrimination rule to the first device;
or
obtaining a historical valid relationship set, wherein the historical valid relationship set comprises a plurality of historical valid relationship groups, each historical valid relationship group comprises two historical network entities having an association relationship and one or more historical attribute pairs enabling the two historical network entities to have an association relationship, and each historical attribute pair separately comprises one attribute of the two historical network entities;
generating a valid relationship type group based on types of the two historical network entities having an association relationship and the historical attribute pair enabling the two historical network entities to have an association relationship that are in the historical valid relationship group; and
sending a valid relationship type set to the first device, wherein the valid relationship type set comprises a plurality of valid relationship type groups.

31. The method according to claim 29 or 30, wherein the template matching file comprises a plurality of command line templates, each command line template is used to describe a format of a command line in the configuration information of the type of network device, and the method further comprises:
obtaining, from the template matching file, a plurality of command line templates that successfully match command lines in historical configuration information of the type of network device;
using, as a command line template in a target command line template set, a command line template that is in the plurality of command line templates and whose accumulated quantity of times of successfully matching the command line in the historical configuration information of the type of network device reaches a target threshold of matching; and
sending the target command line template set to the first device.

32. The method according to any one of claims 29 to 31, wherein the method further comprises:
obtaining, in the historical configuration information of the type of network device, all historical command lines that correspond to network entities;
generating a collection of entity-like ontologies based on command line expressions corresponding to all the historical command lines; and
sending the collection of entity-like ontologies to the first device;
or
obtaining a plurality of sample command line expressions whose command lines are known to correspond to network entities or not;
training, by using the plurality of sample command line expressions, to obtain an entity discrimination model; and
sending the entity discrimination model to the first device.

33. An apparatus for constructing a knowledge graph, used in a first device, wherein the apparatus comprises:
an obtaining module, configured to obtain first configuration information of a target network device, wherein
the obtaining module is further configured to obtain a template matching file corresponding to the target network device, wherein the template matching file is used to describe one or more formats of one or more command lines in configuration information of a type of network device to which the target network device belongs; and
a processing module, configured to create, based on the template matching file and a first command line in the first configuration information, a target network entity corresponding to the first command line, wherein a type of the target network entity is a device, an interface, a protocol, or a service, and the target network entity is configured to construct a knowledge graph of a network in which the target network device is located.

34. The apparatus according to claim 33, wherein the template matching file comprises a plurality of command line templates, each command line template is used to describe a format of a command line in the configuration information of the type of network device, and the processing module is configured to:
determine, in the template matching file, a target command line template that matches the first command line; and
create the target network entity based on the target command line template and the first command line.

35. The apparatus according to claim 34, wherein the command line template is obtained based on a command line expression, the command line template comprises all content in the command line expression, the command line template can indicate a sequence of content included in a corresponding command line in the command line, and the command line expression comprises a description of the corresponding command line in the configuration information of the type of network device.

36. The apparatus according to claim 35, wherein that the first command line matches the target command line template comprises: the first command line comprises all mandatory content in the target command line template, and a sequence of the content included in the first command line is consistent with a sequence indicated by the target command line template.

37. The apparatus according to claim 35 or 36, wherein a command line expression corresponding to the first command line comprises one or more parameters, and the processing module is configured to:
generate one or more parameter key-value pairs based on the target command line template and the first command line, wherein the parameter key-value pair comprises a parameter name of a parameter in the target command line template and a corresponding parameter value in the first command line; and
create the target network entity based on the one or more parameter key-value pairs.

38. The apparatus according to any one of claims 34 to 37, wherein the command line template is obtained based on the command line expression, and the command line template comprises a regular expression of the command line expression; and
the processing module is configured to:
use a first command line template in the template matching file as a to-be-matched command line template, wherein the first command line template is any command line template in the template matching file; and
execute a template matching procedure on the to-be-matched command line template, wherein the template matching procedure comprises:
performing regular expression matching with the first command line by using a regular expression in the to-be-matched command line template; and
when the regular expression successfully matches the first command line, using the to-be-matched command line template as the target command line template; or
when the regular expression fails to match the first command line, using a second command line template in the template matching file as a new to-be-matched command line template, and executing the template matching procedure again, wherein the second command line template is any command line template on which no template matching procedure has been executed in the template matching file; or
the processing module is configured to:
use a third command line template in a target command line template set as a to-be-matched command line template, wherein the target command line template set comprises a command line template that is in the template matching file and that successfully matches a command line in historical configuration information of the type of network device, and the third command line template is any command line template in the target command line template set; and
execute a template matching procedure on the to-be-matched command line template, wherein the template matching procedure comprises:
performing regular expression matching with the first command line by using a regular expression in the to-be-matched command line template; and
when the regular expression successfully matches the first command line, using the to-be-matched command line template as the target command line template; or
when the regular expression fails to match the first command line, if the target command line template set comprises a fourth command line template, using the fourth command line template as a new to-be-matched command line template, and executing the template matching procedure again; or if the target command line template set does not comprise the fourth command line template, using a fifth command line template as a new to-be-matched command line template, and executing the template matching procedure again, wherein
the fourth command line template is any command line template on which no template matching procedure has been performed in the target command line template set, and the fifth command line template is any command line template on which no template matching procedure has been performed in the template matching file.

39. The apparatus according to claim 38, wherein the command line template further comprises a target content list, the target content list comprises one or more pieces of mandatory fixed content in a corresponding command line, and the processing module is configured to:
when the first command line comprises all content in a target content list in the to-be-matched command line template, perform regular expression matching with the first command line by using the regular expression in the to-be-matched command line template.

40. The apparatus according to any one of claims 34 to 39, wherein the command line template is obtained based on the command line expression, and the processing module is further configured to:
obtain a target command line expression corresponding to the target command line template; and
determine, based on the target command line expression, whether a network entity needs to be created for the first command line, and after it is determined that a network entity needs to be created for the first command line, create the target network entity based on the target command line template and the first command line.

41. The apparatus according to claim 40, wherein
the processing module is configured to: when a collection of entity-like ontologies comprises the target command line expression, determine that a network entity needs to be created for the first command line; or
the processing module is configured to input the target command line expression to an entity discrimination model, to obtain a result output by the entity discrimination model based on the target command line expression, wherein the result comprises a first indication that a network entity needs to be created for the first command line or a second indication that no network entity needs to be created for the first command line, and the entity discrimination model is obtained based on a plurality of sample command line expressions whose corresponding command lines are known to correspond to network entities or not; and when the result comprises the first indication, determine that a network entity needs to be created for the first command line; or when the result comprises the second indication, determine that no network entity needs to be created for the first command line.

42. The apparatus according to any one of claims 33 to 41, wherein the processing module is further configured to:
determine, based on one or more attributes of the target network entity, an associated network entity that has an association relationship with the target network entity;
generate a knowledge graph triplet based on the target network entity, the associated network entity, and the association relationship; and
construct, based on the knowledge graph triplet, the knowledge graph of the network in which the target network device is located.

43. The apparatus according to claim 42, wherein the processing module is configured to:
obtain a to-be-determined network entity from a network entity set, wherein the to-be-determined network entity meets: the to-be-determined network entity has a first attribute, the first attribute is any attribute of the target network entity, and an attribute meaning and an attribute value of the first attribute of the to-be-determined network entity are respectively the same as an attribute meaning and an attribute value of a first attribute of the target network entity; and the network entity set comprises a network entity created based on one or more other command lines in the first configuration information;
determine, according to an association relationship validity discrimination rule, whether an association relationship that is between the to-be-determined network entity and the target network entity and that is based on the first attribute is valid; and
when the association relationship that is between the to-be-determined network entity and the target network entity and that is based on the first attribute is valid, determine the to-be-determined network entity as the associated network entity.

44. The apparatus according to claim 43, wherein the processing module is configured to:
obtain one or more initial network entities from the network entity set, wherein the initial network entity has a to-be-determined attribute, and an attribute value of the to-be-determined attribute is the same as the attribute value of the first attribute of the target network entity;
when a text similarity between an attribute name of the to-be-determined attribute of the initial network entity and an attribute name of the first attribute of the target network entity is greater than a first threshold, and/or a text similarity between text content of the to-be-determined attribute in a command line expression corresponding to the initial network entity and text content of the first attribute in a command line expression corresponding to the target network entity is greater than a second threshold, determine that an attribute meaning of the to-be-determined attribute is the same as the attribute meaning of the first attribute of the target network entity; and
determine the initial network entity as the to-be-determined network entity.

45. The apparatus according to claim 42, wherein the processing module is configured to:
obtain, from a valid relationship type set, a target valid relationship type group comprising the type of the target network entity, wherein the valid relationship type set comprises a plurality of valid relationship type groups, each valid relationship type group comprises two entity types and one attribute pair, the two entity types are types of two network entities having an association relationship, the attribute pair comprises two attributes enabling the two network entities to have an association relationship, and the two attributes have a same attribute meaning;
obtain a to-be-determined network entity based on the target valid relationship type group, wherein two entity types in the target valid relationship type group are the type of the target network entity and a type of the to-be-determined network entity; and
when an attribute value of a second attribute of the to-be-determined network entity is the same as an attribute value of a third attribute of the target network entity, determine the to-be-determined network entity as the associated network entity, wherein the second attribute is an attribute corresponding to the type of the to-be-determined network entity in an attribute pair of the target valid relationship type group, and the third attribute is an attribute corresponding to the type of the target network entity in the attribute pair of the target valid relationship type group.

46. An apparatus for constructing a knowledge graph, used in a second device, wherein the apparatus comprises:
a processing module, configured to generate a template matching file corresponding to a type of network device, wherein the template matching file is used to describe one or more formats of one or more command lines in configuration information of the type of network device; and
a sending module, configured to send the template matching file to a first device, to enable the first device to create a network entity corresponding to a command line in configuration information of any network device with the type of network device, wherein a type of the network entity is a device, an interface, a protocol, or a service.

47. The apparatus according to claim 46, wherein
the processing module is further configured to: obtain a sample network entity pair set, and determine an association relationship validity discrimination rule based on the sample network entity pair set, wherein the sample network entity pair set comprises a plurality of sample network entity pairs that are known to have an association relationship or not and attributes of sample network entities in each sample network entity pair; and
the sending module is further configured to send the association relationship validity discrimination rule to the first device;
and/or
the processing module is further configured to obtain a historical valid relationship set, wherein the historical valid relationship set comprises a plurality of historical valid relationship groups, each historical valid relationship group comprises two historical network entities having an association relationship and one or more historical attribute pairs enabling the two historical network entities to have an association relationship, and each historical attribute pair separately comprises one attribute of the two historical network entities;
the processing module is further configured to generate a valid relationship type group based on types of the two historical network entities having an association relationship and the historical attribute pair enabling the two historical network entities to have an association relationship that are in the historical valid relationship group; and
the sending module is further configured to send a valid relationship type set to the first device, wherein the valid relationship type set comprises a plurality of valid relationship type groups;
and/or
the template matching file comprises a plurality of command line templates, and each command line template is used to describe a format of a command line in the configuration information of the type of network device;
the processing module is further configured to: obtain, from the template matching file, a plurality of command line templates that successfully match command lines in historical configuration information of the type of network device, and use, as a command line template in a target command line template set, a command line template that is in the plurality of command line templates and whose accumulated quantity of times of successfully matching the command line in the historical configuration information of the type of network device reaches a target threshold of matching; and
the sending module is further configured to send the target command line template set to the first device;
and/or
the processing module is further configured to obtain, in the historical configuration information of the type of network device, all historical command lines that correspond to network entities; and generate a collection of entity-like ontologies based on command line expressions corresponding to all the historical command lines; and
the sending module is further configured to send the collection of entity-like ontologies to the first device;
and/or
the processing module is further configured to: obtain a plurality of sample command line expressions whose corresponding command lines are known to correspond to network entities or not, and train, by using the plurality of sample command line expressions, to obtain an entity discrimination model; and
the sending module is further configured to send the entity discrimination model to the first device.

48. A computer device, comprising a processor and a memory, wherein
the memory is configured to store a computer program, and the computer program comprises program instructions; and
the processor is configured to invoke the computer program to implement the method for constructing a knowledge graph according to any one of claims 1 to 28, or implement the method for constructing a knowledge graph according to any one of claims 29 to 32.

49. A system for constructing a knowledge graph, comprising a first device and a second device, wherein the first device comprises the apparatus according to any one of claims 33 to 45 or the computer device according to claim 48, and the second device comprises the apparatus according to claim 46 or 47 or the computer device according to claim 48.

50. A computer storage medium, wherein the computer storage medium stores instructions; and when the instructions are executed by a processor, the method for constructing a knowledge graph according to any one of claims 1 to 32 is implemented.
